# NEUE EUROPÄISCHE PATENTSCHRIFT

(11) **EP 1 216 278 B2**
(45) Veröffentlichungstag und Bekanntmachung des Hinweises auf die Entscheidung über den Einspruch: **09.12.2015**
(45) Hinweis auf die Patenterteilung: 02.03.2005
(21) Anmeldenummer: 00947966.8
(22) Anmeldetag: 11.07.2000
(51) Int. Cl.: C09D 7/12

(54) **MIT NANOPARTIKELN MODIFIZIERTE BINDEMITTEL FÜR ÜBERZUGSMITTEL UND DEREN VERWENDUNG**
BINDING AGENTS MODIFIED WITH NANOPARTICLES, FOR COATINGS, AND USE THEREOF
LIANTS MODIFIES AVEC DES NANOPARTICULES, DESTINES A DES MATERIAUX DE REVETEMENT, ET LEUR UTILISATION

(30) Priorität: 15.07.1999 DE 19933098
(43) Veröffentlichungstag der Anmeldung: 26.06.2002
(73) Patentinhaber: E. I. du Pont de Nemours and Company, Wilmington, DE 19898 (US)
(72) Erfinder: KLOSTERMANN, Peter, D-42117 Wuppertal (DE); REKOWSKI, Volker, D-44892 Bochum (DE); SAATWEBER, Dietrich, D-42369 Wuppertal (DE)
(74) Vertreter: Hughes, Andrea Michelle
(86) Internationale Anmeldenummer: PCT/EP2000/006552
(87) Internationale Veröffentlichungsnummer: WO 2001/005897

(56) Entgegenhaltungen:
- EP-A- 0 832 947
- EP-A1- 0 505 230
- EP-A1- 0 505 737
- EP-A1- 1 112 295
- EP-A2- 0 832 947
- WO-A-95/27012
- WO-A1-97/41183
- US-A- 4 845 070
- DATABASE WPI Section Ch, Week 199641 Derwent Publications Ltd., London, GB; Class A18, AN 1996-408590 XP002151665 & JP 08 199090 A (NIPPON CARBIDE KOGYO KK) , 6. August 1996 (1996-08-06)

## Beschreibung

Die Erfindung betrifft mit Nanopartikeln modifizierte Bindemittel für Lacksysteme, diese enthaltende Überzugsmittel und deren Anwendung.

Nanopartikel enthaltende Lacksysteme sind Stand der Technik. Die Nanopartikel führen zu einem verbesserten Eigenschaftsbild der Lacksysteme beispielsweise hinsichtlich Kratzfestigkeit, Lösemittel- und Chemikalienbeständigkeit. Beispielsweise beschreibt die EP-A-0 832 947 kratzfeste Klarlacke auf Basis eines Bindemittel/Vernetzersystems und reaktive Gruppen auf der Partikeloberfläche aufweisenden Nanopartikeln. Desweiteren beschreibt die EP-A-0 872 500 kratzfeste Überzugsmittel auf Basis einer Kombination von hydroxyfunktlonellen Bindemitteln mit blockierte Isocyanatgruppen auf der Partikeloberfläche aufweisenden Nanopartikeln. Beim Härten der aus diesen Überzugsmitteln applizierten Überzugsschichten werden die Nanopartikel in die Überzugsschicht chemisch eingebunden.

In der noch nicht veröffentlichten deutschen Patentanmeldung 199 25 331.5 (entsprechend WO02/75244A1) werden mit Nanopartikeln modifizierte Bindemittel beschrieben, die durch Umsetzung von carboxylfunktionellen Nanopartikeln mit epoxidfunktlonellen Bindemitteln hergestellt werden.

Es kann Verträglichkeitsprobleme bei der Einarbeitung von Nanopartikeln in Lacksysteme geben. Beispielsweise ergibt sich bei Nanopartikel enthaltenden Lacksystemen des Standes derTechnikmituntereine inhomogene Verteilung der Nanopartikel in den aus diesen Überzugsmitteln applizierten Überzugsschlchten oder eine homogene Verteilung der Nanopartikel in den Überzugsmitteln als solchen ist von Anfang an schwierig, wenn nicht gar unmöglich.

Es besteht die Aufgabe derartige Verträglichkeitsprobleme in Nanopartikel enthaltenden Lacksystemen zu beseitigen oder weitgehend zu vermeiden.

Die Aufgabe kann gelöst werden durch Umsetzung von mit einer reaktiven Funktionalität ausgestatteten Nanopartikeln mit Bindemitteln, die eine zu der reaktiven Funktionalität der Nanopartikel komplementär reaktive Funktionalität aufweisen, zu mit Nanopartikeln modifizierten Lackbindemitteln, wobei die Herstellung der Bindemittel in Gegenwart der Nanopartikel erfolgt und wobei die Kombination von Carboxylgruppen als reaktive Funktionalität der Nanopartikel und Epoxidgruppen als komplementär reaktive Funktionalität der Bindemittel ausgeschlossen ist.

Ein Gegenstand der Erfindung ist daher ein duroplastisches Überzugsmittel, enthaltend ein oder mehrere mit Nanopartikeln modifizierte fremdvernetzende Bindemittel, wobei die Bindemittel erhältlich sind durch ein Verfahren, welches dadurch gekennzeichnet ist, dass es die Synthese des Bindemittels aus seinen Edukten in Gegenwart der Nanopartikel umfaßt, worin
- die Nanopartikel eine reaktive Funktionalität aufweisen, die komplementär zur reaktiven Funktionalität des Bindemittels bzw. seiner Edukte ist,
- das Bindemittel bzw. seine Edukte eine zur reaktiven Funktionalität der Nanopartikel komplementäre reaktive Funktionalität aufweisen, und
- die Umsetzung der genannten, zueinander komplementären reaktiven Funktionalitäten vor und/oder während der eigentlichen Synthese des Bindemittels unter Ausbildung einer kovalenten Bindung erfolgt und die Umsetzung lösemittelfrei oder in Gegenwart von organischem Lösungsmittel erfolgt,
- und wobei die Kombination von Carboxylgruppen als reaktive Funktionalität der Nanopartikel und Epoxidgruppen als komplementär reaktive Funktionalität der Bindemittel bzw. der Bindemitteledukte ausgeschlossen ist, und Vernetzer neben den mit Nanopartikeln modifizierten Bindemitteln.

Hier und im folgenden sollen die reaktive Funktionalität der Nanopartikel als funktionelle Gruppen (A) und die zu der reaktiven Funktionalität der Nanopartikel komplementär reaktive Funktionalität der Bindemittel als funktionelle Gruppen (B) bezeichnet werden.

Die funktionellen Gruppen (A) und (B) weisen eine zueinander komplementäre Reaktivität auf, d.h. sie können unter Ausbildung einer kovalenten Bindung miteinander reagieren.

Bei den funktionellen Gruppen (A) und den funktionellen Gruppen (B) handelt es sich um funktionelle Gruppen, die durch radikalische Polymerisation und/oder unter Addition und/oder Kondensation miteinander reagieren können. Beispiele für Additionsreaktionen zwischen (A)- und (B)-Gruppen sind die ringöffnende Addition einer Epoxidgruppe an eine Carboxylgruppe unter Bildung einer Ester- und einer Hydroxylgruppe, die Addition einer Hydroxyl- und/oder primären und/ oder sekundären Aminogruppe an eine Isocyanatgruppe unter Bildung einer Urethanund/oder Hamstoffgruppe, die Addition einer primären und/oder sekundären Aminogruppe und/oder CH-aciden Gruppe an eine alpha,beta-ungesättigte Carbonylgruppe, insbesondere (Meth)acryloylgruppe, die Addition einer primären und/ oder sekundären Aminogruppe an eine Epoxidgruppe. Beispiele für Kondensationsreaktionen zwischen (A)-und (B)-Gruppen sind die Reaktion einer Hydroxyl- und/ oder primären und/oder sekundären Aminogruppe mit einer blockierten Isocyanatgruppe unter Bildung einer Urethan- und/oder Harnstoffgruppe und Abspaltung des Blockierungsmittels, die Reaktion einer Hydroxylgruppe mit einer N-Methylolgruppe unter Wasserabspaltung, die Reaktion einer Hydroxylgruppe mit einer N-Methylolethergruppe unter Abspaltung des Veretherungsalkohols, die Umesterungsreaktion einer Hydroxylgruppe mit einer Estergruppe unter Abspaltung des Veresterungsalkohols, die Umurethanisierungsreaktion einer Hydroxylgruppe mit einer Carbamatgruppe unter Alkoholabspaltung, die Reaktion einer Carbamatgruppe mit einer N-Methylolethergruppe unter Abspaltung des Veretherungsalkohols. Beispiele für funktionelle Gruppen (A) und (B), die durch radikalische Polymerisation miteinander reagieren können, sind olefinisch ungesättigte Gruppen, z.B. Vinylgruppen, Allylgruppen, insbesondere (Meth)acryloylgruppen.

Bei den Nanopartikeln handelt es sich um übliche dem Fachmann bekannte Partikel aus dem "Nanometer"-Größenbereich, beispielsweise mit einer mittleren Teilchengröße von 5 bis 200 nm, bevorzugt 10 bis 100 nm, die funktionelle Gruppen (A) insbesondere an der Partikeloberfläche enthalten. Die Nanopartikel können einphasig aufgebaut sein oder einen Kern/Hülle-Aufbau besitzen. Einphasig aufgebaute Nanopartikel enthalten funktionelle Gruppen (A), insbesondere an der Partikeloberfläche. Im Falle von aus Kern und Hülle aufgebauten Nanopartikeln sind die funktionellen Gruppen (A) Bestandteil der Hülle und gegebenenfalls zusätzlich des Kerns. Das (A)-Äquivalentgewicht der Nanopartikel beträgt beispielsweise 250 bis 3000.

Die einphasig aufgebauten Nanopartikel sind anorganischer Natur und mit funktionellen Gruppen (A) und gegebenenfalls weiteren organischen Resten modifiziert. Beispielsweise handelt es sich um Element-Sauerstoff-Netzwerke mit Elementen aus der ReiheAluminium, Bor, Titan, Zirkon und/oder Silizium, bevorzugt Silizium.

Bevorzugt handelt es sich bei den einphasig aufgebauten Nanopartikeln umteilchenförmigealuminium-, bor-, titan-, zirkon- und/oder siliziumorganische, besonders bevorzugt siliziumorganische Polymere (la) der Formel (R₃SiO_{1/2})_{w}(R₂SiO_{2/2})ₓ(RSiO_{3/2})_{y}(SiO_{4/2})_{z}, wobei y = 10 bis 100 Mol-% und die Summe aus w, x, y und z 100 Mol-% betragen soll. Bei den gleichen oder verschiedenen Resten R kann es sich um funktionelle Gruppen (A) oder um in funktionelle Gruppen (A) überführbare Gruppen an sich oder bevorzugt um Reste, die die funktionellen Gruppen (A) oder die in funktionelle Gruppen (A) überführbaren Gruppen tragen, handeln. Neben diesen Gruppen kann es sich auch um C1-C6-Alkylreste, insbesondere Methylreste, Arylreste, wie z.B. Phenylreste handeln. Nicht als Einschränkung zu verstehende Beispielefürfunktionelle Gruppen (A), die bevorzugt über einen Rest an Silizium gebunden sind, sind Epoxidgruppen, Carboxylgruppen, Hydroxylgruppen, Aminogruppen, blockierte Isocyanatgruppen, olefinisch ungesättigte Gruppen, Alkoxysilangruppen. Funktionelle Gruppen (A), beispielsweise Carboxylgruppen, Hydroxylgruppen oder Aminogruppen können gegebenefalls auch in blockierter Form vorliegen. Beispiele für Reste, die funktionelle Gruppen (A) oder in funktionelle Gruppen (A) überführbare Gruppen tragen, sind entsprechend substituierte Kohlenwasserstoffreste, insbesondere substituierte Alkylreste, z.B. Alkenylreste, wie z.B. der Vinyl- oder Allylrest, oder Mercaptoalkyl-, Cyanoalkyl-, Aminoalkyl-, Acyloxyalkyl-, wie 3-(Meth)acryloyloxypropyl-, Glycidylreste und Hydroxyalkylreste.

Die Herstellung siliziumorganischer Polymere (la) kann z.B. nach einem einstufigen Emulsionspolymerisationsverfahren beispielsweise durch Zudosieren eines monomeren Silans RSi(OR')₃ oder eines Gemisches monomerer Silane vom Typ RₐSi(OR')₄₋ₐ, wobei a = 0, 1, 2 oder 3 ist, zu einer bewegten Emulgator/Wasser-Mischung erfolgen. Ebenfalls möglich ist eine zweistufige Verfahrensweise des Emulsionspolymerisationsverfahrens, wobei die in der ersten Verfahrensstufe umgesetzten Silane bevorzugt keine funktionellen Gruppen (A) besitzen und die Umsetzung der funktionelle Gruppen (A) aufweisenden Silane erst in der 2. Verfahrensstufe erfolgt. R hat die bereits benannte Bedeutung. R'steht für C1-C6-Alkylreste, Arylreste oder substituierte Kohlenwasserstoffreste. Prinzip und Einzelheiten der Durchführung solcher Emulsionspolymerisationsverfahren sind dem Fachmann bekannt, beispielsweise aus der EP-A-0 492 376.

Die funktionellen Gruppen (A) werden in der Regel bei der Herstellung der siliziumorganischen Polymeren (la) über entsprechende Reste R aufweisende Silane eingeführt. Sie können beispielsweise auch durch geeignete, dem organischen Chemiker bekannte Umsetzungen erzeugt werden. Dies sei an einem weder eine Beschränkung noch eine Bevorzugung darstellenden Beispiel erläutert: Carboxylgruppen als funktionelle Gruppen (A) können beispielsweise durch Verseifung von Cyanoalkylresten oder durch Oxidation geeigneter Reste erzeugt werden.

Bei den aus Kern und Hülle aufgebauten Nanopartikeln ist der Kern anorganischer Natur und ist gegebenenfalls durch weitere organische Reste modifiziert. Beispielsweise handelt es sich um Element-Sauerstoff-Netzwerke mit Elementen aus der Reihe Aluminium, Bor, Titan, Zirkon und/oder Silizium, bevorzugt Silizium.

Es kann sich bei den Kernen auch um kolloidale Metalloxide handeln, bevorzugt ist dem Fachmann bekanntes kolloidales Silziumdioxid, beispielsweise als Pulver oder als Dispersion in einem wäßrigen oder anderen organischen Lösemittel.

Bevorzugt handelt es sich bei den Kernen von aus Kern und Hülle aufgebauten Nanopartikeln um aluminium-, bor-, titan-, zirkon- und/oder siliziumorganische, besonders bevorzugt siliziumorganische Polymere (Ib) der Formel (R"₃SiO_{1/2})_{w}(R"₂SiO_{2/2})ₓ(R"SiO_{3/2})_{y} (SiO_{4/2})_{z}, wobei y = 10 bis 100 Mol-% und die Summe aus w, x, y und z 100 Mol-% betragen soll. Bei den gleichen oder verschiedenen Resten R" kann es sich beispielsweise um C1-C6-Alkylreste, insbesondere Methylreste, Arylreste, wie z.B. Phenylreste handeln. Neben oder anstelle dieser kann es sich jedoch auch um funktionelle Gruppen (A) oder um in funktionelle Gruppen (A) überführbare Gruppen an sich oder bevorzugt um Reste, die funktionelle Gruppen (A) oder in funktionelle Gruppen (A) überführbare Gruppen tragen, handeln. Die im Zusammenhang mit den Polymeren (la) gemachten Ausführungen zu den Beispielen für die (A) -Gruppen bzw. die (A)-Gruppen tragenden Reste gelten hier analog.

Die Herstellung solcher siliziumorganischer Polymere (Ib) kann z.B. nach dem Emulsionspolymerisationsverfahren beispielsweise durch Zudosieren eines monomeren Silans R"Si(OR')₃ oder eines Gemisches monomerer Silane vom Typ R"ₐSi(OR')₄₋ₐ, wobei a = 0, 1, 2 oder 3 ist, zu einer bewegten Emulgator/Wasser-Mischung erfolgen. R" hat die bereits benannte Bedeutung. R'steht für C1-C6-Alkylreste, Arylreste oder substituierte Kohlenwasserstoffreste. Prinzip und Einzelheiten der Durchführung solcher Emulsionspolymerisationsverfahren sind dem Fachmann bekannt, beispielsweise aus der EP-A-0 492 376.

Bezüglich der Einführung der funktionellen Gruppen (A) in die siliziumorganischen Polymeren (Ib) gilt das vorstehende im Zusammenhang mit der Einführung der funktionellen Gruppen (A) in die siliziumorganischen Polymeren (Ia) gesagte.

Im Falle von aus Kern und Hülle aufgebauten Nanopartikeln sind die Kerne, beispielsweise vom Typ (Ib) bevorzugt mit einem funktionelle Gruppen (A) aufweisenden (Meth)acrylcopolymeren umhüllt. Zur Herstellung der aus Kern und funktionelle Gruppen (A) aufweisenden (Meth)acrylcopolymerhülle aufgebauten Nanopartikel werden (meth)acrylisch ungesättigte Monomere in Gegenwart der Kerne radikalisch polymerisiert, beispielsweise emulsionspolymerisiert, beispielsweise im Sinne einer Pfropfpolymerisation auf die Kerne. Zur Einführung der funktionellen Gruppen (A) in die (Meth)acrylcopolymerhülle werden bei der Polymerisation bevorzugt geeignete funktionelle Gruppen (A) aufweisende ungesättigte Monomere eingesetzt oder mitverwendet. Beispiele für zur Einführung von Carboxylgruppen als funktionelle Gruppen (A) geeignete olefinisch ungesättigte Monomere sind (Meth)acryl-, Itacon-, Croton-, Isocroton-, Aconit-, Malein- und Fumarsäure, Halbester der Malein- und Fumarsäure sowie Carboxyalkylester der (Meth)acrylsäure, z.B. beta-Carboxyethylacrylat und-Addukte von Hydroxyalkyl(meth) acrylaten mit Carbonsäureanhydriden, wie z.B. der Phthalsäure-mono-2-(meth)acryloyloxyethylester. Beispiele für zur Einführung von Hydroxylgruppen als funktionelle Gruppen (A) geeignete olefinisch ungesättigte Monomere sind insbesondere Hydroxyalkyl(meth)acrylate. Beispiele für zur Einführung von Epoxidgruppen als funktionelle Gruppen (A) geeignete olefinisch ungesättigte Monomere sind (Meth)allylglycidylether, 3,4-Epoxy-1-vinylcyclohexan, Epoxycyclohexyl(meth)acrylat, Vinylglycidylether, insbesondere jedoch Glycidyl(meth) acrylat. Die funktionelle Gruppen (A) aufweisenden Monomeren werden dabei im allgemeinen gemeinsam mit davon unterschiedlichen radikalisch copolymerisierbaren olefinisch ungesättigten Monomeren eingesetzt. Prinzip und Einzelheiten der Durchführung radikalischer Polymerisationen, beispielsweise Emulsionspolymerisationen sind dem Fachmann bekannt.

Erfindungsgemäß werden Bindemittel mit funktionellen Gruppen (B) in Gegenwart von funktionelle Gruppen (A) aufweisenden Nanopartikeln hergestellt. Dabei werden die funktionelle Gruppen (A) aufweisenden Nanopartikel mit den funktionelle Gruppen (B) aufweisenden Bindemitteln umgesetzt. Die Umsetzung der (A)- mit den (B)-Gruppen kann vor, beispielsweise mit den zur Herstellung der funktionelle Gruppen (B) aufweisenden Bindemittel eingesetzten Edukten, und/oder während und/oder nach der Synthese der funktionelle Gruppen (B) aufweisenden Bindemittel erfolgen. Bei den zur Herstellung der funktionelle Gruppen (B) aufweisenden Bindemittel verwendeten Edukten handelt es sich um Bindemittelbausteine, die neben einer oder mehreren (B)- oder in (B)-Gruppen überführbaren Gruppen von (B)-Gruppen verschiedene funktionelle Gruppen enthalten können. Die Synthese der funktionelle Gruppen (B) aufweisenden Bindemittel aus den Edukten kann dabei unterteilweisem Verbrauch der (B)- oder in (B)-Gruppen überführbaren Gruppen der Edukte erfolgen.

Bei den zur Umsetzung mit funktionelle Gruppen (A) aufweisenden Nanopartikeln geeigneten funktionelle Gruppen (B) tragenden Bindemitteln bestehen keine Beschränkungen. Es kann sich beispielsweise um funktionelle Gruppen (B) aufweisende Polyester, Polyurethane, (Meth)acrylcopolymere sowie um andere Polymere handeln. Die funktionelle Gruppen (B) aufweisenden Polymeren besitzen mindestens eine, bevorzugt mindestens zwei funktionelle Gruppen (B) im Molekül, entsprechend einem berechneten (B)-Äquivalentgewicht von beispielsweise 150 bis 2000, bezogen auf Festharz. Die zahlenmittlere Molmasse (Mn) liegt bevorzugt bei 200 bis 10000.

Die Herstellung der funktionelle Gruppen (B) aufweisenden Bindemittel, beispielsweise Polyester, Polyurethane, (Meth)acrylcopolymere ist dem Fachmann hinreichend bekannt und bedarf keiner Erläuterung.

Nicht als Einschränkung zu verstehende Beispiele für funktionelle Gruppen (B) sind Epoxidgruppen, Carboxylgruppen, Hydroxylgruppen, Aminogruppen, Isocyanatgruppen, olefinisch ungesättigte Gruppen, Alkoxysilangruppen. Funktionelle Gruppen (B), beispielsweise Carboxylgruppen, Hydroxylgruppen, Isocyanatgruppen oder Aminogruppen können gegebenenfalls auch in blockierter Form vorliegen.

Die funktionelle Gruppen (A) aufweisenden Nanopartikel werden mit funktionelle Gruppen (B) aufweisenden Bindemitteln beispielsweise im Gewichtsverhältnis 5 bis 30 Gew.-% Nanopartikel zu 70 bis 95 Gew.-% Bindemittel oder zum Aufbau des Bindemittels eingesetzten Bindemittelbausteinen zu den erfindungsgemäßen Bindemitteln umgesetzt. Die Gew.-% beziehen sich dabei jeweils auf den Festkörper. Die funktionellen Gruppen (A) der Nanopartikel können dabei beispielsweise in einem Verhältnis zu den funktionellen Gruppen (B) der Bindemittel von 10 zu 1 bis 1 zu 100 vorliegen. Die Umsetzung kann dabei unter tellwelsem oder vollständigem Verbrauch der funktionellen Gruppen (A) der Nanopartikel und/oder der funktionellen Gruppen (B) der Bindemittel erfolgen. Die Reaktion kann beispielsweise bei erhöhten Temperaturen, beispielsweise 80 bis 160 °C, gegebenenfalls unter Katalyse durchgeführt werden. Die Bindemittel werden in Gegenwart der Nanopartikel hergestellt, wobei die Umsetzung derfunktionellen Gruppen (A) und (B) vor, während und/oder nach der eigentlichen Bindemittelsynthese erfolgen kann. Dabei wird die Umsetzung lösemittelfrei oder in Gegenwart von organischem Lösemittel durchgeführt.

Die erfindungsgemäßen Bindemittel können neben den aus der Reaktion von (A) und (B) hervorgegangenen, gegebenenfalls wiederum reaktiven Gruppen, wie beispielsweise Estergruppen, Urethangruppen, Siloxangruppen, Harnstoffgruppen, Hydroxylgruppen, eine oder mehrere weitere funktionelle Gruppen aufweisen. Diese weiteren funktionellen Gruppen können beispielsweise im Überschuß vorhanden gewesene und/oder nicht umgesetzte Gruppen (A) und/oder (B) sein und/oder es handelt sich um andere funktionelle Gruppen. Die weiteren funktionellen Gruppen können aus den Nanopartikeln und/oder aus den damit umgesetzten Bindemitteln stammen oder sie können nach der Herstellung der erfindungsgemäßen Bindemittel eingeführt werden. Beispiele für weitere funktionelle Gruppen der Bindemittel sind Hydroxylgruppen, olefinisch ungesättigte Gruppen, z.B. Meth)acryloylgruppen, Epoxidgruppen, Carboxylgruppen, Aminogruppen, Alkoxysilangruppen.

Die erfindungsgemäßen mit Nanopartikeln modifizierten Bindemittel können als solche, bevorzugt jedoch nach Vermischen mit weiteren Bestandteilen als Überzugsmittel verwendet werden. Die Erfindung betrifft daher auch Überzugsmittel, die die erfindungsgemäßen mit Nanopartikeln modifizierten Bindemittel enthalten.

Es kann sich um thermoplastische, bevorzugt jedoch um duroplastische, selbst-oderfremdvernetzende Überzugsmittel handeln.

Thermoplastische Überzugsmittel enthalten keine Vernetzer und sie sind auch nicht selbstvernetzbar. Es handelt sich dabei z.B. um physikalisch trocknende Überzugsmittel.

Bevorzugt werden aus den erfindungsgemäßen Bindemitteln duroplastische Überzugsmittel hergestellt. Dann handelt es sich bei den erfindungsgemäßen Bindemitteln um solche, die eine oder mehrere reaktive Funktionalitäten aufweisen, welche die Grundlage für eine chemische Vernetzbarkeit liefern. Es kann sich um selbst- oder fremdvernetzende Bindemittel handeln. Im letzteren Fall enthalten die Überzugsmittel neben den erfindungsgemäßen mit Nanopartikeln modifizierten Lackbindemitteln Vernetzer.

Die Auswahl der Vernetzer richtet sich nach den in den mit Nanopartikeln modifizierten Lackbindemitteln enthaltenen funktionellen Gruppen, d.h. die Vernetzer werden so ausgewählt, daß sie eine zur Funktionalität der erfindungsgemäßen Bindemittel komplementäre, reaktive Funktionalität aufweisen, wobei die funktionellen Gruppen durch radikalische Polymerisation und/oder unter Addition und/oder Kondensation miteinander reagieren können. Als Beispiele für Additionsund Kondensationsreaktionen sind die gleichen zu nennen, wie sie vorstehend als Beispiele für zwischen funktionellen Gruppen (A) und (B) mögliche Additions- und Kondensationsreaktionen aufgezählt wurden. Sofern miteinander verträglich, können auch mehrere komplementäre Funktionalitäten in einem durch Additions- und/ oder Kondensationsreaktionen härtbaren Überzugsmlttel nebeneinander vorliegen, so daß zwei oder mehrere unterschiedliche der vorstehend beispielhaft genannten Reaktionstypen während der Härtung auftreten können.

Im Falle von durch radikalische Polymerisation fremdvernetzenden Überzugsmitteln kann es sich um thermisch oder photochemisch induziert radikalisch polymerislerbare Überzugsmittel handeln. Diese enthalten erfindungsgemäße, mit Nanopartikeln modifizierte Bindemittel mit radikalisch polymerisierbaren, olefinisch ungesättigten Gruppen sowie gegebenenfalls weitere radikalisch copolymerisierbare Komponenten. Beispiele für solche Komponenten sind Prepolymere, wie Poly- oder Oligomere, die radikalisch polymerisierbare, olefinische Doppelbindungen, insbesondere (Meth)acryloylgruppen im Molekül aufweisen, beispielsweise (meth) acrylfunktionelle (Meth)acrylcopolymere, Epoxidharz (meth)acrylate, Polyester(meth)acrylate, Polyether(meth)acrylate, Polyurethan(meth)acrylate, ungesättigte Polyester, ungesättigte Polyurethane oder Silikon(meth)acrylate, beispielsweise mit zahlenmittleren Molekularmassen (Mn) bevorzugt im Bereich von 200 bis 10000, besonders bevorzugt von 500 bis 3000 und beispielsweise mit durchschnittlich 2 bis 20, bevorzugt 3 bis 10 radikalisch polymerisierbaren, olefinischen Doppelbindungen pro Molekül. Ebenso können Reaktiwerdünner, d.h. reaktive Monomere, wie z.B. (Meth)acrylsäure und deren Ester, Maleinsäure und deren Halbester, Vinylacetat, Vinylether, substituierte Vinylhamstoffe, Ethylen- und Propylenglykoldi(meth)acrylat, 1,3- und 1,4-Butandioldi(meth)acrylat, Vlnyl(meth)acrylat, Allyl (meth)acrylat, Glycerintri- , -di- und -mono(meth)acrylat, Trimethylolpropantri-, -di- und -mono(meth)acrylat, Styrol, Vinyltoluol, Divinylbenzol, Pentaerythrittri- und -tetra(meth)acrylat, Di- und Tripropylenglykoldi(meth) acrylat, Hexandioldi(meth)acrylat enthalten sein. Die radikalisch härtenden Systeme können Photoinitiatoren bzw. thermische Radikalinitiatoren enthalten.

Bei den durch Additions- und/oder Kondensationsreaktionen härtbaren Überzugsmitteln kann es sich um ein- oder mehrkomponentige Lacksysteme handeln.

Beispiele für bevorzugte ein- oder zweikomponentige Lacksysteme sind solche, die hydroxyfunktionelle (Meth)acrylcopolymere, Polyesterharze und/oder Polyurethanharze als mit Nanopartikeln modifizierte Bindemittel und mit den Hydroxylgruppen der Bindemittel unter Ether- und/oder Estergruppenbildung vernetzende Komponenten auf Triazinbasis, beispielsweise Tris(alkoxycarbonylamino)triazin, Aminoplastharze, insbesondere Melaminharze und/oder Umesterungsvernetzer und/oder freie oder blockierte Polyisocyanate als Vernetzer enthalten. Weitere bevorzugte ein- oder zweikomponentige Lacksysteme sind solche, die epoxidfunktionelle mit Nanopartikeln modifizierte Bindemittel, insbesondere epoxidfunktionelle mit Nanopartikeln modifizierte (Meth)acrylcopolymere in Kombination mit carboxylfunktionellen Vernetzern enthalten. Die Vernetzer sind dem Fachmann bekannt und bedürfen keiner näheren Erläuterung.

Die erfindungsgemäßen Überzugsmittel können neben den mit Nanopartikeln modifizierten Bindemitteln weitere gegebenenfalls mit reaktiven Gruppen, insbesondere mit den gleichen reaktiven Gruppen wie die mit Nanopartikeln modifizierten Bindemittel ausgestattete lackübliche Bindemittel enthalten.

Beispielsweise liegen in den erfindungsgemäßen Überzugsmitteln sich zu 100 Gew.-% ergänzende Festkörpergewichtsverhältnisse von 60 bis 100 Gew.-% mit Nanopartikeln modifizierter Bindemittel zu 0 bis 40 Gew.-% Vernetzer zu 0 bis 40 Gew.-% weiterer Bindemittel vor.

Die erfindungsgemäßen Überzugsmittel können Pigmente und/oder Füllstoffe sowie lackübliche Additive in lacküblichen Mengen enthalten.

Die erfindungsgemäßen Überzugsmittel können lösemittelfrei formuliert werden oder sie enthalten lackübliche organische Lösemittel und/oder Wasser. Wäßrige Überzugsmittel können beispielsweise als Emulsion vorliegen. Dabei kann der emulgierte Zustand durch Zusatz externer Emulgatoren erreicht werden oder es handelt sich um Systeme, die in Wasser selbstemulgierend wirkende Gruppen, beispielsweise ionische Gruppen enthalten.

Die erfindungsgemäßen Überzugsmittel können zur Herstellung beliebiger Überzugsschichten verwendet werden, beispielsweise zur Herstellung von Grundierungs-, Basislack-, Füller-, Decklack-, Klarlackschichten. Sie können durch übliche Applikationsmethoden auf beliebige Substrate z.B. aus Metall, Kunststoff, Holz, Glas aufgebracht werden. Beispiele für Applikationsmethoden sind Streichen, Rollen, Rakeln, Tauchen, insbesondere aber Spritzen. Nach der Applikation werden die aus den erfindungsgemäßen Überzugmitteln aufgebrachten Überzugsschichten nach einer gegebenenfalls gewährten Ablüft- oder Aufschmelzphase getrocknet oder gehärtet. Dies kann je nach Zusammensetzung dererfindungsgemäßen Überzugsmittel bei Raumtemperatur oder forciert bei erhöhten Temperaturen, beispielsweise 40 bis 80 °C oder durch Einbrennen bei höheren Temperaturen, beispielsweise 80 bis 220 °C erfolgen. Im Falle strahlenhärtbarer erfindungsgemäßer Überzugsmittel erfolgt die Härtung durch Einwirkung energiereicher Strahlung, z.B. UV-Strahlung.

Die erfindungsgemäßen mit Nanopartikeln modifizierten Bindemittel zeigen weder bei ihrer Herstellung, Lagerung, bei oder nach ihrer Einarbeitung in Überzugsmittel noch bei oder nach Applikation der Überzugsmittel Verträglichkeitsprobleme zwischen Nanopartikeln und weiteren Bindemittel-, respektive Überzugsmittelbestandteilen. Die Bindemittel und Überzugsmittel sind lagerstabil. Die aus den erfindungsgemäßen Überzugsmitteln aufgebrachten Überzugsschichten besitzen beispielsweise sehr gute Oberflächeneigenschaften, insbesondere z.B. eine hohe Kratzfestigkeit und Chemikalienbeständigkeit.

### Beispiel 1

400 g Propylencarbonat wurden auf 80°C erhitzt und und man ließ während 4 Stunden eine Mischung aus 278 g Highlink OG 100-31 der Firma Clariant (30 gew.-%ige Suspension von mit olefinisch ungesättigten Gruppen modifizierten SiO₂-Nanopartikeln mit einer Teilchengröße von 13 nm in Hydroxyethylmethacrylat), 240 g Isobutylmethacrylat, 46 g Isobutylacrylat, 12 g Acrylsäure und 24 g Azobisisobutyronitril zutropfen. Während weiterer 4 Stunden wurde nachpolymerisiert.

### Beispiel 2

400 g Propylencarbonat wurden auf 80°C erhitzt und und man ließ während 4 Stunden eine Mischung aus 194,6 g Hydroxyethylmethacrylat, 310 g Isobutylmethacrylat, 59,4 g Isobutylacrylat, 12 g Acrylsäure und 24 g Azobisisobutyronitril zutropfen. Während weiterer 4 Stunden wurde nachpolymerisiert.

### Beispiel 3

Herstellung einer Basislack/Klarlack-Zweischichtlackierung:

Ein schwarzer Wasserbasislack wurde auf ein übliches, phosphatiertes und durch kathodische Tauchlackierung und mit Füller vorbeschichtetes Karosserieblech durch Spritzen in einer Trockenschichtdicke von 15 µm aufgebracht. Nach der Applikation wurde 5 Minuten bei 80°C vorgetrocknet. Anschliessend wurde mit einem wie folgt hergestellten Klarlack in einer Trokkenschichtdicke von 35 µm überlackiert und 20 Minuten bei 140°C (Objekttemperatur) eingebrannt.

Der Klarlack (Spritzviskosität DIN4 bei 20°C von 30 Sekunden) wurde hergestellt, indem 112 g der in Beispiel 1 erhaltenen Harzlösung mit 98 g Butylacetat versetzt und anschließend mit 36 g einer 90 gew.-%igen HDI-Isocyanurat-Polyisocyanat-Lösung in Butylacetat/ Solvesso 100 vermischt wurden.

### Beispiel 4

### Herstellung einer Basislack/Klarlack-Zweischichtlackierung:

Beispiel 3 wurde wiederholt mit dem Unterschied, daß der Klarlack (Spritzviskosität DIN4 bei 20°C von 30 Sekunden) hergestellt wurde, indem 112 g der in Beispiel 2 erhaltenen Harzlösung mit 79 g Butylacetat versetzt und anschließend mit 36 g einer 90 gew.-%igen HDI-Isocyanurat-Polyisocyanat-Lösung in Butylacetat/ Solvesso 100 vermischt wurden.

Die Kratzfestigkeit der in Beispiel 3 und 4 erhaltenen Lackierungen wurde durch Messung des Restglanzes nach Waschverkratzung bestimmt (Beispiel 3, Restglanz 76%; Beispiel 4, Restglanz 58%).

Gemessen wurde der Restglanz in % (Verhältnis aus Anfangsglanz (20°) der Lackierung zu deren Glanz nach Waschverkratzung, Glanzmessung jeweils bei einem Beleuchtungswinkel von 20°). Die Waschverkratzung wurde unter Verwendung der Laborwaschstraße der Firma Amtec Kistler durchgeführt (vgl. Th. Klimmasch und Th. Engbert, Entwicklung einer einheitlichen Laborprüfmethode für die Beurteilung der Waschstraßenbeständigkeit von Automobil-Decklacken, in DFO-Berichtsband 32, Seiten 59 bis 66, Technologie-Tage, Berichtsband des Seminars am 29. und 30.4.97 in Köln, Herausgeber Deutsche Forschungsgesellschaft für Oberflächenbehandlung e.V., Adersstraße 94, 40215 Düsseldorf).

## Patentansprüche

1. Duroplastische Überzugsmittel, enthaltend ein oder mehrere mit Nanopartikeln modifizierte fremdvernetzende Bindemittel, wobei die Bindemittel erhältlich sind durch ein Verfahren, welches **dadurch gekennzeichnet ist, dass** es die Synthese des Bindemittels aus seinen Edukten in Gegenwart der Nanopartikel umfaßt, worin
- die Nanopartikel eine reaktive Funktionalität aufweisen, die komplementär zur reaktiven Funktionalität des Bindemittels bzw. seiner Edukte ist,
- das Bindemittel bzw. seine Edukte eine zur reaktiven Funktionalität der Nanopartikel komplementäre reaktive Funktionalität aufweisen, und
- die Umsetzung der genannten, zueinander komplementären reaktiven Funktionalitäten vor und/or während der eigentlichen Synthese des Bindemittels unter Ausbildung einer kovalenten Bindung erfolgt und die Umsetzung lösemittelfrei oder in Gegenwart von organischem Lösungsmittel erfolgt,
- und wobei die Kombination von Carboxylgruppen als reaktive Funktionalität der Nanopartikel und Epoxidgruppen als komplementär reaktive Funktionalität der Bindemittel bzw. der Bindemitteledukte ausgeschlossen ist,
und Vernetzer neben den mit Nanopartikeln modifizierten Bindemitteln.

2. Überzugsmittel nach Anspruch 1, **dadurch gekennzeichnet, dass** die Nanopartikel eine mittlere Teilchengrösse von 5 bis 200 nm aufweisen.

## Claims

1. Thermosetting coating means comprising one or more externally crosslinking binders modified with nanoparticles, the binders being obtainable by a process which is **characterized in that** it comprises synthesizing the binder from its educts in the presence of the nanoparticles, wherein
- the nanoparticles have a reactive functionality complementary to the reactive functionality of the binder or its educts,
- the binder or its educts have a reactive functionality complementary to the reactive functionality of the nanoparticles, and
- the reaction of said mutually complementary reactive functionalities takes place before and/or during the actual synthesis of the binder through the formation of a covalent bond and the reaction takes place without a solvent or in the presence of an organic solvent,
- and wherein the combination of carboxyl groups as the reactive functionality of the nanoparticles and epoxy groups as the complementary reactive functionality of the binders or the binder educts is excluded,
and crosslinkers in addition to the binders modified with nanoparticles.

2. Coating means according to claim 1, **characterized in that** the nanoparticles have a mean particle size of 5 to 200 nm.

## Revendications

1. Agents de revêtement thermodurcissables, comprenant un ou plusieurs liants à réticulation externe modifiés avec des nanoparticules, les liants pouvant être obtenus par un procédé **caractérisé en ce qu'**il comprend la synthèse du liant à partir de ses réactifs en présence des nanoparticules, où
- les nanoparticules présentent une fonctionnalité réactive, qui est complémentaire à la fonctionnalité réactive du liant ou de ses réactifs,
- le liant ou ses réactifs présentent une fonctionnalité réactive complémentaire à la fonctionnalité réactive des nanoparticules, et
- la réaction desdites fonctionnalités réactives complémentaires l'une à l'autre, est réalisée avant et/ou pendant la synthèse propre du liant par la formation d'une liaison covalente et la réaction a lieu sans solvant ou en présence d'un solvant organique,
- et où la combinaison de groupes carboxyle comme fonctionnalité réactive des nanoparticules et de groupes époxyde comme fonctionnalité réactive complémentaire des liants ou des réactifs du liant est exclue,
et des agents de réticulation outre les liants modifiés avec des nanoparticules.

2. Agents de revêtement selon la revendication 1, **caractérisés en ce que** les nanoparticules ont une taille de particules moyenne de 5 à 200 nm.
